## Europäisches Patentamt
## European Patent Office
## Office européen des brevets

(19)

(11) Veröffentlichungsnummer: **0 333 724**
**B1**

(12) **EUROPÄISCHE PATENTSCHRIFT**

(45) Veröffentlichungstag der Patentschrift: **02.01.91**

(51) Int. Cl.⁵: **G 06 K 7/14**

(21) Anmeldenummer: **87907423.5**

(22) Anmeldetag: **05.11.87**

(86) Internationale Anmeldenummer:
**PCT/EP87/00677**

(87) Internationale Veröffentlichungsnummer:
**WO 88/04083 02.06.88 Gazette 88/12**

(54) **VORRICHTUNG ZUR IDENTIFIKATION EINER CODIERUNG AUF EINEM CODETRÄGER.**

(30) Priorität: **18.11.86 CH 4600/86**

(43) Veröffentlichungstag der Anmeldung:
**27.09.89 Patentblatt 89/39**

(45) Bekanntmachung des Hinweises auf die
Patenterteilung:
**02.01.91 Patentblatt 91/01**

(84) Benannte Vertragsstaaten:
**DE FR GB IT SE**

(56) Entgegenhaltungen:
**FR-A-2 470 999**
**US-A-4 034 211**
**US-A-4 544 836**

(73) Patentinhaber: **G. M. Pfaff Aktiengesellschaft**
**Königstrasse 154**
**D-6750 Kaiserslautern (DE)**

(72) Erfinder: **ISELI, Fritz, Frank**
**Feldstrasse 19**
**CH-8805 Richterswil (CH)**

(74) Vertreter: **Klein, Friedrich**
**Königstrasse 154**
**D-6750 Kaiserslautern (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Vorrichtung nach dem Oberbegriff des Anspruches 1.

Aus der US-PS 45 44 836 ist eine Vorrichtung zur Identifikation einer Codierung bekannt, die durch eine Mehrzahl von Polarisationsfiltern unterschiedlicher Breite und wechselnder, zueinander senkrecht stehender Polarisationsrichtungen gebildet ist. Die Vorrichtung ist bei einem Ausführungsbeispiel mit einer Lichtquelle und zwei Detektoren ausgebildet, von denen nur einem ein Polarisationsfilter vorgeschaltet ist, dessen Polarisationsrichtung einer der beiden Polarisationsrichtungen der Codierung entspricht. Die Lichtquelle und die Detektoren sind entweder auf einer Seite einer mit einem Reflektor versehenen Codierung oder einander gegenüberliegend zu beiden Seiten einer lichtdurchlässigen Codierung angeordnet.

Von der Strahlung der Lichtquelle wird ein Teil in Richtung der Detektoren gestreut. Dabei gelangen nur die Lichtstrahlen in den mit einem Polarisationsfilter versehenen Detektor, deren Polarisationsrichtung der des Polarisationsfilters entspricht, während in den zweiten Detektor Lichtstrahlen beider Polarisationsrichtungen eintreten.

Wenn bei einer derartigen Vorrichtung am Rahmen des Codeträgers eine Lichtstreuung wie an den Polarisationsfiltern der Codierung erfolgt, wird der Anfang und das Ende der Codierung durch den zweiten Detektor nicht wahrgenommen. Da dem ersten Detektor in einem solchen Fall unpolarisiertes Streulicht zugeführt wird, durchläuft der in Polarisationsrichtung des vorgeschalteten Polarisationsfilters schwingende Strahlungsanteil den Filter und tritt in den Detektor ein, wo er fälschlicherweise als Codesignal gelesen wird.

Da infolge der Lichtstreuung nur ein Teil der Strahlung in die Detektoren gelangt, müssen diese entweder besonders empfindlich ausgebildet sein oder es ist eine relativ starke Lichtquelle zu verwenden. Dieser Nachteil tritt noch stärker in Erscheinung, wenn die Codierung nicht in absolut konstantem Abstand an den Detektoren vorbeigeführt wird, da sich bei Abstandsänderung die Strahlungsdichte stark ändert, was die Signalauswertung verfälschen kann. Es dürfte daher eine relativ genaue Abstandsführung für den Codeträger erforderlich sein.

Aufgrund der unterschiedlichen Breite der Polarisationsfilter des Codeträgers ist die Zeit, in der ein Signal am ersten Detektor anliegt, für die Auswertung erforderlich. Um diese Zeit nicht zu verfälschen, ist es notwendig, die Codierung mit konstanter Geschwindigkeit an den Detektoren vorbeizuführen und eine die Abtaststrecke verlängernde Schräglage der Codierung oder ein Verwackeln von dieser zu verhindern. Da hierzu ein zusätzlicher Antrieb und eine präzise mechanische Führung erforderlich sind, ist der Bauaufwand beträchtlich.

In der FR-OS 24 70 999 ist eine andere Codierung beschrieben, die mit Nocken ausgebildet ist, von denen jeder jeweils eine Reflexionsfläche aufweist. Die Reflexionsflächen sind in zwei unterschiedlichen, je einem Detektor zugewendeten Ebenen geneigt. Den beiden Detektoren ist eine Lichtquelle zugeordnet.

Beim Vorbeibewegen der Codierung an den Detektoren treffen die Lichtstrahlen nacheinander auf die Reflexionsflächen und werden in von der Codierung abhängiger Folge jeweils einem der Detektoren zugeleitet.

Die Codierung ist sehr einfach aufgebaut, ist aber aufgrund der Nocken als Codeträger relativ groß bauend und daher für Anwendungsbereiche, bei denen eine hohe Informationsdichte auf kleinstem Raum benötigt wird, unzweckmäßig.

Aus der US-PS 40 34 211 ist eine weitere Vorrichtung zur Indentifikation einer Codierung bekannt. Die Codierung wird durch eine Mehrzahl von Beugungsgittern mit unterschiedlichen Beugungsrichtungen gebildet, welche die von einer Lichtquelle emittierten Lichtstrahlen beim Vorbeibewegen der Codierung zu je einer Beugungsrichtung zugeordneten Detektor umlenken. Die Reihenfolge des Lichtempfangs der Detektoren gibt den Code an.

In der Zeitschrift Funkschau 17/1983 auf den Seiten 57 bis 60 und in der Zeitschrift Philips Technical Review, Volume 42, No. 2, August 1985 auf den Seiten 37 bis 47 sind Vorrichtungen zum magnetooptischen Löschen und Wiederbespielen einer CD-Disk abgebildet. Der Lichtstrahl eines Lasers wird auf einem Weg zwischen Sender bzw. Empänger und einer CD-Disk durch Strahlungsteiler zerlegt.

Der Erfindung liegt die Aufgabe zugrunde, eine Vorrichtung zur Identifikation einer aus Polarisationsfiltern gebildeten und auf einem Codeträger angeordneten Codierung so auszuführen, daß jedem Polarisationsfilter eine Information entnehmbar ist, die gegenüber der durch den restlichen Teil des Codeträgers gelieferten Information unverwechselbar angezeigt wird und daß die zu den Detektoren geleiteten Strahlungsteile unabhängig vom Abstand zwischen der Codierung und den Detektoren ohne Streuverluste übertragen werden.

Diese Aufgabe wird durch eine Vorrichtung nach dem Kennzeichenteil des Anspruches 1 gelöst.

Die Maßnahme, die Polarisationsfilter vor den Detektoren mit zueinander senkrechten Polarisationsrichtungen auszubilden bewirkt, daß die beim Durchlauf des jeweils im Überwachungsbereich der Vorrichtung angeordneten Codefensters polarisierte Strahlung in einen ersten Detektor gelangt, dessen Polarisationsfilter die gleiche Polarisationsrichtung wie die Strahlung aufweist, während ein zweiter Detektor, dessen Polarisationsfilter mit einer dazu senkrechten Polarisationsrichtung ausgeführt ist, keine Strahlung empfängt. Bei um 90° gedrehter Polarisationsrichtung der Strahlung nach Durchgang durch ein anderes Codefenster wird dagegen ausschließlich der zweite Detektor aktiviert, so daß bei jedem Codefenster genau ein Signal von einem der Detektoren als 1-Bit-Information aufgenommen wird, was eine eindeutige Identifikation jedes Codefensters ermöglicht.

Dieser Zustand ändert sich, sobald der Codeträger in eine Stellung bewegt wird, in der sich dessen die Codefenster umschließender Rahmen im Strahlungsweg befindet oder in der sich der Codeträger außerhalb des Überwachungsbereiches befindet. Wenn beispielsweise an einer Seite des Codeträgers die Strahlungsquelle und, dieser gegenüberliegend, an der anderen Seite die Detektoren angeordnet sind, nehmen beide Detektoren bei sich außerhalb des Überwachungsbereiches befindendem Codeträger aufgrund der unpolarisierten Strahlung ein Signal auf, während sie bei durch den Codeträgerrahmen unterbrochenem Strahlungsweg kein Signal empfangen. Im Gegensatz dazu gelangt bei Anordnung der Strahlungsquelle und der Detektoren auf der gleichen Seite des Codeträgers keine Strahlung in die Detektoren, wenn sich der als Reflektor wirkende Codeträger außerhalb des Überwachungsbereiches befindet. Bei Anwesenheit des Codeträgerrahmens im Strahlungsweg wird unpolarisiertes Licht zu den beiden Detektoren geleitet.

Der Stahlungsteiler zerlegt die von der Codierung kommende Strahlung in Strahlungsbündel, von denen jedes in Richtung eines zugeordneten Detektors umgelenkt wird. Aufgrund der Ausrichtung der Strahlungsbündel auf die Detektoren sind Streuverluste vernachlässigbar gering, so daß die Detektoren Signale relativ großer Strahlungsintensität empfangen. Gegenüber diesen Signalen wirken sich durch Umgebungslicht verursachte Störungen wegen ihrer erheblich geringeren Strahlungsintensität nicht auf die Genauigkeit der Identifikation aus.

Bei der nach Anspruch 2 ausgebildeten Vorrichtung ist die Codierung wegen der gleichen Breite der Codefenster ausschließlich durch die Reihenfolge, mit der die Signale in die einzelnen Detektoren eintreten, identifizierbar. Da die Signaldauer hierbei unmaßgeblich ist, muß beim Einschub des Codeträgers in den Überwachungsbereich der Vorrichtung nur die Vorschubrichtung beibehalten werden, während die Vorschubgeschwindigkeit auch starken Schwankungen unterliegen darf. Damit ist die Vorrichtung auch dafür geeignet, den Codeträger von Hand zu verschieben.

Die Maßnahme des Anspruches 3 bewirkt, daß die einzelnen Signale zeitlich getrennt voneinander in die Detektoren gelangen. Dadurch wird vermieden, daß zwei aufeinander folgende Strahlungsbündel mit gleicher Polarisationsrichtung als ein Signal gelesen werden.

In Anspruch 4 ist eine vorteilhafte Ausbildung des Strahlungsteilers angegeben.

Der Anspruch 5 ist auf eine Ausführung der Vorrichtung gerichtet, bei der die Strahlung die Codierung von einer Seite zur anderen hin durchläuft, während bei der Ausführung nach Anspruch 6 die Strahlung an einem mit der Codierung zusammenwirkenden Reflektor umgelenkt wird, so daß ankommende und reflektierte Strahlung auf einer Seite der Codierung verlaufen.

Die Maßnahme nach Anspruch 7 bewirkt, daß durch einen Codeträger Informationen gleichzeitig an zwei Empfangseinrichtungen übertragbar sind.

Die Erfindung ist anhand von in der Zeichnung dargestellten Ausführungsbeispielen erläutert.

Fig. 1 zeigt eine Grundanordnung von Sender/ Empfänger und Codeträger;

Fig. 2A, 2B, 2C, 2D zeigen verschiedene Betriebszustände des Systems;

Fig. 3 zeigt die Wahrheitstabelle der in den Figuren 2 dargestellten Betriebszustände;

Fig. 4 zeigt einen Codierträger mit den digitalen Zustandsformen;

Fig. 5 zeigt in schematischer Darstellung eine mögliche Abweichung aus der vorgegebenen Leseachse als Momentaufnahme, beispielsweise als Teil eines Jitters in der Codeträgerführung;

Fig. 6 zeigt in perspektivischer Darstellung eine erste Ausführungsform (Gabelschranke) und

Fig. 7 zeigt in perspektivischer Darstellung eine zweite Ausführungsform (Einseitenleser unter Benützung von Reflexion).

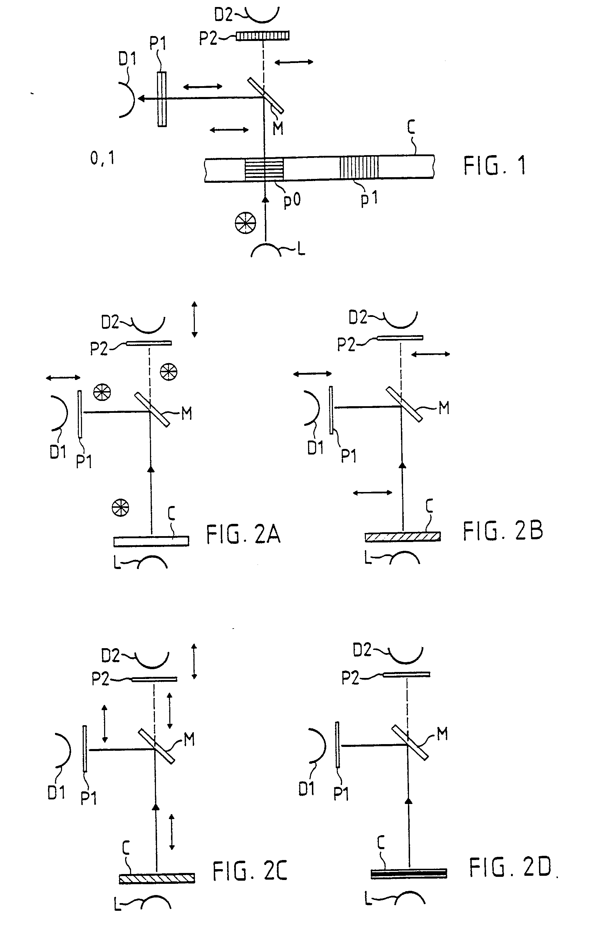

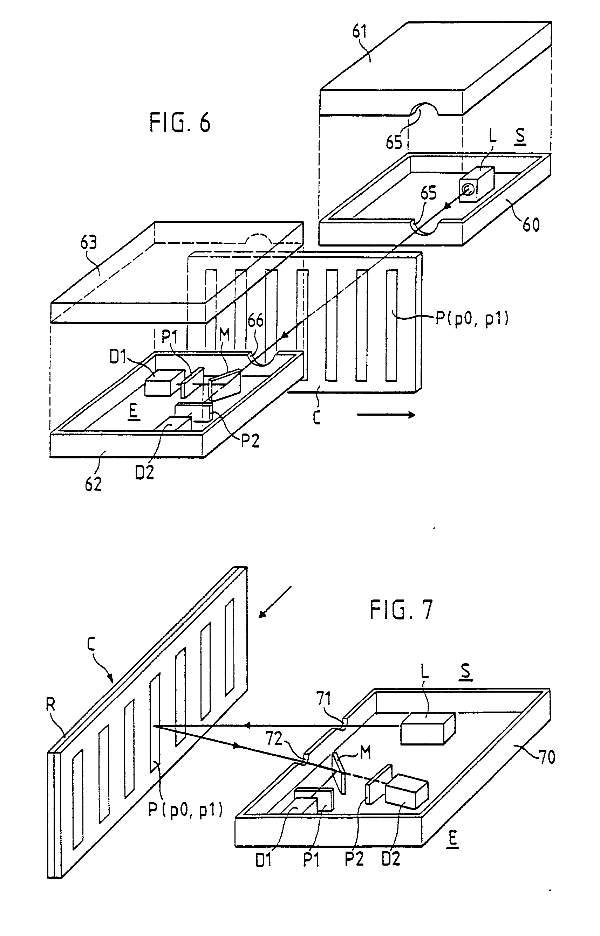

Die schematische Prinzipdarstellung in Figur 1 zeigt die Grundanordnung eines Codelesersystems bestehend aus Sender/Empfänger und Codeträger. Der Sender besteht aus einer Lichtquelle L, welche eine Glühlampe im sichtbaren Bereich oder im UV- bzw. IR-Grenzbereich, eine Laserquelle in einem brauchbaren Bereich oder eine andere Strahlungsquelle sein kann. Um eine Beeinflussung des Lesevorganges durch Streulicht zu verhindern, wird die Strahlungsquelle vorzugsweise im Pulsbetrieb benützt und nur durch die Strahlung übertragene Information mit der Pulsfrequenz der Lichtquelle ausgewertet.

Der Empfänger enthält zwei Detektoren D1 und D2, die über einen Strahlteilungsmechanismus Licht von der Strahlungsquelle L erhalten. Der Strahlteilungsmechanismus ist hier ein halbdurchlässiger Spiegel M im Verhältnis von ungefähr 50/50. Jeder Detektor D1, D2 hat ein Polarisationsfilter P1 und P2 vorgeschaltet, welche zueinander optisch gekreuzt stehen. Der Codeträger C weist Codefenster P auf, die ebenfalls Polarisationsfilter p0 und p1 aufweisen, wobei je nach Codefenster 0 oder 1 die Filter optisch gekreuzt zueinander stehen. Zur Unterscheidung der lichtpolarisierenden Mittel im Detektorbereich und auf dem Codeträger sind die zwei stationären Filter mit P1 und P2 den Detektoren zugeordnet und die nicht stationären Filter auf dem Codeträger C mit der bit-Information p0 und p1 bezeichnet. Durch die stationären Filter ist aber auch jeder Detektor entweder ein 0-Detektor oder ein 1-Detektor, wobei, das ist hervorzuheben, beide Detektoren simultan arbeiten, und 0 (Null) nicht beispielsweise durch Fehlen von Licht angezeigt ist.

Das von der Strahlungsquelle kommende Licht weist Schwingungen in allen Ebenen der Fortpflanzungsrichtung auf, was mit einem Kreis mit Speichen neben dem Lichtstrahl dargestellt ist. Nach dem p0-Filter ist nur noch Licht mit einer definierten Schwingung vorhanden. Dem Licht wurde somit die Information NULL eingeprägt. Dieses Licht mit der Information NULL wird im Spiegel M in zwei Strahlungsbündel aufgeteilt und gleichzeitig den 0- und 1-Detektoren zugeführt. Im vorliegenden Fall ist der Detektor D1 ein 0-Detektor (durch 90°-Drehung des Filters wird er zum 1-Detektor). Der Detektor D1 registriert ein 0-Codeelement, der Detektor D2 registriert kein Licht, was in der Auswertung weder 0 noch 1 bedeutet. Damit ist ein indifferenter Zustand im Zusammenhang mit der Identifikation ausgeschlossen; beide bit 0 und 1 erhalten einen Hoch-Pegel. Diese Eigenschaft ermöglicht, wie noch erörtert werden wird, eine Synchronisation durch die bit-Folge gleichzeitig mit dem Lesen.

Wird der Codeträger in Figur 1 nach links zum nächsten bit p1 weitergeschoben, so erhält der Detektor D2 bit-1-geprägtes Licht und der 0-Detektor D1 erhält kein Licht. Somit zeigt der Detektor D2 das Vorhandensein eines 1-bit im Strahlenbündel an.

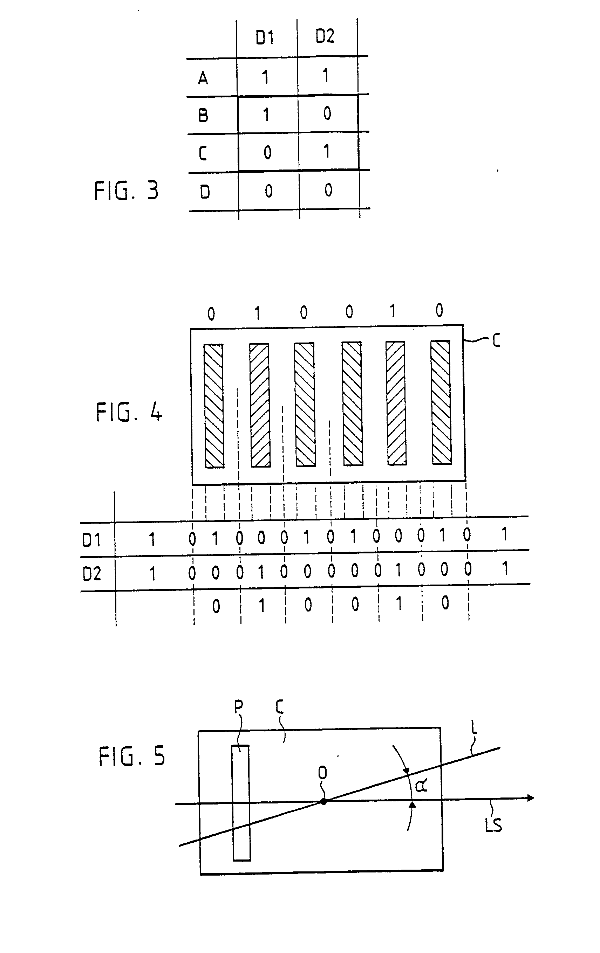

Die Fig. 2A bis 2D zeigen schematisch vier mögliche Betriebszustände des Gesamtsystems und Figur 3 zeigt die Wahrheitstabelle dazu. Im Fall A befindet sich kein Codeträger im Strahlengang, beide Detektoren erhalten Licht und melden zusammen den Zustand 1, 1 gemäß Wahrheitstabelle. Dies ist eine Äquivalenz und bedeutet "kein Codeträger vorhanden". Die Fälle B und C zeigen die adäquat polarisierten bit-0 und bit-1 und die Detektoren D1 und D2 melden die Zustände 1,0 und 0,1 gemäß Wahrheitstabelle. Dies sind Antivalenzen (zusammen XOR) und bedeuten eine NULL oder eine EINS des Codes auf dem Codeträger. Im Fall D befindet sich ein lichtundurchlässiger Gegenstand im Strahlengang, beispielsweise der Codeträgerrahmen und die Detektoren melden "kein Licht", was dem Zustand 0,0 gemäß Wahrheitstabelle entspricht. Dies ist wieder eine Aquivalenz und bedeutet "verdeckter Strahlengang". Wie man nun feststellen kann, ergibt sich unter Einbezug des Zustandes "kein Licht auf den Detektoren" eine Wahrheitstabelle, mit welcher die beschriebenen vier Zustände unterschieden werden können. Doch zur Unterscheidung einer EINS oder einer NULL aus der Identifikation, also dem Code, sind nur HOCH (invertiert TIEF) zugelassen, was nicht nur zusätzliche Sicherheit, sondern auch die Verwendungsmöglichkeit des Codes zur Synchronisation bringt.

Die Synchronisation ist in diesem Falle durch die Codefenster schon gegeben, da das System jedes (nota bene gleich breite) Fenster 0 oder 1 detektieren kann und sie auch detektiert. Dazu kann, wie auch für die Identifikation, die XOR-Funktion ausgewertet werden. Der Einbezug der Äquivalenzen, also die vollständige Ausnutzung der Wahrheitstabelle, ermöglicht die Zustandsdetektion von "irgend etwas im Strahlengang" und von "gar nichts im Strahlengang". Bezogen auf den Codeträger sind diese Zustände in Figur 4 dargestellt.

Figur 4 zeigt den Codeträger C mit einem 6-Byte, bestehend aus Fenstern mit Polarisationsfiltern, p0 und p1, die zu einer bit-Folge 0,1, 0,0, 1,0 gekreuzt sind. Gemäß Wahrheitstabelle melden die Detektoren D1, D2 links vom Codeträger mit 1,1 "noch kein Codeträger da", anschließend melden sie mit 0,0 "Rahmen eingetroffen" und gleich darauf erkennen sie das erste 0-bit (1,0), das vom Detektor D1 erkannt wird. Dann folgt wieder ein lichtundurchlässiger Steg (0,0) gefolgt von einem 1-bit (0,1), das jetzt aber vom Detektor D2 erkannt wird. Zusammen haben die Detektoren 2 Fenster festgestellt, was 2 Elementen der in die Information verschachtelten Synchronisation entspricht.

Auf diese Weise wird der Codeträger abgelesen, bis mit dem Eintreffen einer 1,1 die Detektoren "Ende des Codeträgers" vermelden und das Auswertesystem mit dieser Information auch den folgenden Prozeßschritt einleiten kann. Die Zustände der Wahrheitstabelle können auch, im Sinne der Identifikationssicherheit, so ausgewertet werden, daß auf einem Kanal lediglich erlaubte Zustände (Antivalenzen) ausgewertet und unerlaubte Zustände (Äquivalenzen) ausgefiltert werden. Auf einem zweiten Kanal kann simultan die ganze Wahrheitstabelle ausgewertet werden.

Figur 5 zeigt in schematischer Darstellung die relative Unempfindlichkeit der mechanischen (Vorbei-) Führung des Codeträgers C am Sender/Empfänger vorbei. Eingezeichnet ist ein Schräglauf 1 um einen Drehpunkt 0 um den Winkel alpha zur idealen Leseachse LS. Eingezeichnet ist eines der stark betroffenen Randfenster P, ein Fenster im Bereich des Drehpunkts 0 wäre nur unwesentlich betroffen. Diese Auslenkung oder Deviation von der gewünschten Leserichtung würde sich auf eine mitgeführte Synchronisationsspur störend auswirken, da aber in der erfindungsgemäßen Lösung die bit-Fenster gleichzeitig die Synchronisation bewirken, muß lediglich sichergestellt werden, daß alle Fenster eines x-Bytes auch im Schräglauf noch gelesen werden können. Der Schräglauf hat neben geometrischen Begrenzungen aber noch optische, nämlich der Polarisations-Grenzwinkel, welcher eine Funktion der Detektorintensität ist. Experimentell zeigte sich, daß ein Schräglauf-Jitter innerhalb +-20° ohne weiteres toleriert werden kann, mit entsprechendem Aufwand, was allerdings nicht das Ziel der Erfindung ist, lassen sich noch Jitter von +-40° optisch gerade noch detektieren (die Grenze liegt theoretisch bei 45°, dem halben Kreuzungswinkel), doch solche Laufabweichungen kommen ohnehin kaum vor.

Mit dieser Darlegung ist jedoch gezeigt, daß dieses Identifikationsprinzip nicht nur sicher im Normalbetrieb, sondern auch noch gleich sicher bei stark gestörtem Betrieb ist. Dieser letztere Betrieb muß jedoch nicht tel quel ein gestörter Betrieb sein. Die Erfindung zielt vielmehr darauf ab, daß ein Lesebetrieb mit einem bemerkenswerten mechanischen Freiheitsgrad zugelassen werden kann, was das vorgeschlagene System einsatzfähig für breiteste Applikationen beispielsweise für den rauhen Betrieb von Transportsystemen macht. Zudem können beispielsweise bestehende Transportsysteme mit irgendwelchem Schlottergestänge, aber auch bessere solche, noch nachträglich mit dem Identifikationssystem gemäß Erfindung nachgerüstet werden.

Die Figuren 6 und 7 zeigen zwei Ausführungsformen der Erfindung, wovon die eine mit einer Lichtschranke mittels Durchstrahlung und die andere mit Sender/Empfänger auf derselben Seite angeordnet mittels Reflexion arbeitet.

Die Anordnung gemäß Figur 6 entspricht im Aufbau der im Zusammenhang mit der Prinziplösung diskutierten Anordnung, nämlich derjenigen mit einer Durchstrahlung des Codeträgers C. Die Figur zeigt in räumlicher Darstellung den Sender S mit der Lichtquelle L in einem Gehäuseunterteil 60 angeordnet, welcher Unterteil mit einem Gehäuseoberteil 61 verschlossen werden kann. Durch eine Lichtaustrittsöffnung 65, falls der Abstand zum Codeträger und Empfänger E nicht zu groß ist, ohne spezielle optische Hilfsmittel, gelangt der Lichtstrahl nach außen und fällt direkt auf den Empfänger E, wenn kein Codierträger in der Schranke ist (Äquivalenz) oder wird abgedunkelt, wenn sich dort irgend ein Gegenstand, der nicht transparent ist, befindet (Äquivalenz) oder er fällt durch ein Codefenster (Antivalenz) auf den Empfänger E, der das ankommende Licht wie beschrieben detektiert.

Dieser Empfänger E ist hier ebenfalls in einem Gehäuseunterteil 62 gezeigt. Darin sind hinter einer Lichteintrittsöffnung 66 der Strahlteilungsspiegel M und die beiden Analysatorfilter P1 und P2 angeordnet, beispielsweise in Schlitze (nicht dargestellt) im Gehäuseboden eingesteckt. Hinter den beiden Filtern P1 und P2 sind die zugehörigen Detektoren D1 und D2 angeordnet, die ebenfalls in vorbereitete Vertiefungen (nicht dargestellt) im Gehäuseboden eingesteckt sind. Abgedeckt wird der Gehäuseunterteil des Empfängers 62 mit dem Gehäuseoberteil 63.

Vorzugsweise werden die einzelnen Gehäuseteile 60, 61, 62, 63 so ausgestaltet, beispielsweise als Spritzgußteile, daß sie sowohl für Sender wie Empfänger und als Ober- sowie als Unterteil verwendet werden können, um damit die bauliche Einfachheit der gesamten Detektiervorrichtung noch weiter auszunützen.

Eine weitere Ausführungsform zeigt Figur 7, welche Detektiervorrichtung, Sender S und Empfänger E im gleichen Gehäuse untergebracht sind. Von der Lichtquelle L gelangt das Licht durch eine Austrittsöffnung 71, mit beispielsweise einer fokussierenden Linse (hier nicht dargestellt) durch ein Codefenster P (p0, p1), wird von der reflektierenden Rückwand R reflektiert und gelangt, da es die richtige Schwingungsebene aufweist, durch dasselbe Codefenster wieder zurück, durch eine Lichteintrittsöffnung 72 auf den Strahlteilungsspiegel M über die Analysatoren P1, P2 auf die Detektoren D1, D2. Der Reflektor R soll so beschaffen sein, daß das vom Polarisationsfilter p0, p1 ankommende Licht nicht gestreut und/oder gebrochen wird. Ersteres verschlechtert die Ausbeute durch Auslenkung eines schon polarisierten Lichtanteils und das zweite vergrößert unnötig den Einfall/Ausfallwinkel der Lichtstrahlen, welcher Winkel möglichst klein sein soll, damit die Detektionsvorrichtung mit Sender/Empfänger baulich klein gehalten werden kann. Wie bei der Lichtschranke, gemäß Figur 6, können auch hier die Gehäuseteile in Spritzgußtechnik so gestaltet sein, daß Unter- und Oberteil austauschbar sind.

**Patentansprüche**

1. Vorrichtung zur Identifikation einer Codierung mit einer Strahlungsquelle und einer Empfangseinrichtung, die mit einer Mehrzahl von Detektoren, von denen mindestens einer einen vorgeschalteten Polarisationsfilter aufweist, ausgebildet und zur Auswertung der in der Strahlung enthaltenen Information vorgesehen ist, wobei die Information durch einen Codeträger mit mindestens einem im Strahlungsweg angeordneten, einen Polarisationsfilter aufweisenden Codefenster zur Darstellung eines Codeelementes auf die Strahlung übertragen wird, dadurch gekennzeichnet, daß jedem möglichen Codeelementenwert ein Detektor mit vorgeschaltetem Polarisationsfilter zugeordnet ist und daß die Strahlung nach Durchgang durch das Codefenster (P) des Codeträgers (C) über einen Strahlungsteiler (M), der zwischen dem Codeträger (C) und den mit unterschiedlichen, zueinander senkrechten Polarisationsrichtungen ausgebildeten Polarisationsfiltern (P1, P2) der Detektoren (D1, D2) angeordnet ist, in Strahlungsbündel aufteilbar und den Detektoren (D1, D2) zuleitbar ist, wobei ein als Signal dienendes Strahlungsbündel nur in den Detektor (D1, D2) gelangt, dessen Polarisationsfilter (P1, P2) in seiner Polarisationsrichtung mit der des Polarisationsfilters (p0, p1) des Codefensters (P) übereinstimmt.

2. Vorrichtung nach Anspruch 1, dadurch gekennzeichnet, daß die Codefenster (P) in Vorschubrichtung in einheitlicher Größe ausgebildet sind.

3. Vorrichtung nach Anspruch 1, dadurch gekennzeichnet, daß die Codefenster (P) in Vorschubrichtung durch Stege des Codeträgers (C) voneinander getrennt sind.

4. Vorrichtung nach Anspruch 1, dadurch gekennzeichnet, daß der Strahlungsteiler (M) als für die Strahlung teildurchlässiger Spiegel ausgebildet ist.

5. Vorrichtung nach Anspruch 1, dadurch gekennzeichnet, daß die Empfangseinrichtung (E) und die dieser zugeordnete Strahlungsquelle (S) in baulich getrennten Einheiten (60, 61; 62, 63) einander gegenüberliegend angeordnet sind und der Codeträger (C) zwischen diesen Einheiten (60, 61; 62, 63) hindurchgeführt wird.

6. Vorrichtung nach Anspruch 1, dadurch gekennzeichnet, daß die Empfangseinrichtung (E) und die dieser zugeordnete Strahlungsquelle (S) im gleichen Gehäuse (70) aufgenommen sind, so daß die von der Strahlungsquelle (S) emittierte Strahlung an einem Reflektor (R) des Codeträgers (C), der an den vom Gehäuse (70) abgewandten Seiten der Codefenster (P) angeordnet ist, reflektiert werden und nach Durchgang durch eine Lichteintrittsöffnung (72), den Strahlungsteiler (M) und die Polarisationsfilter (P1, P2) in die Detektoren (D1, D2) gelangt.

7. Vorrichtung nach Anspruch 1, dadurch gekennzeichnet, daß der Codeträger (C) einen zweiseitig wirksamen Reflektor (R) und beidseitig darüber angeordnet eine Mehrzahl von Polarisationsfiltern (P01, P0r, P11, P1r) aufweist.

**Revendications**

1. Dispositif d'identification d'un codage, avec une source lumineuse et un dispositif récepteur, réalisé avec une pluralité de détecteurs dont au moins un présente un filtre de polarisation en amont, et prévu pour l'interprétation de l'information contenue dans le rayonnement, l'information étant transmise au rayonnement par un support de codage avec au moins une fenêtre de codage destinée à représenter un élément de codage, disposée dans le trajet des rayons et présentant un filtre de polarisation, caractérisé en ce que, à chaque valeur possible des éléments de codage, est attribué un détecteur avec un filtre de polarisation placé en amont, et en ce que le rayonnement, après avoir traversé la fenêtre (P) de codage du support (C) de codage, peut, par l'intermédiaire d'un diviseur optique (M) disposé entre le support (C) de codage et les filtres de polarisation (P1), (P2) des détecteurs (D1), (D2). réalisés avec des sens de polarisation différents perpendiculaires les uns aux autres, être décomposé en faisceaux de rayons et acheminé vers les détecteurs (D1), (D2), un faisceau de rayons servant de signal parvenant au seul détecteur (D1), (D2) dont le filtre de polarisation (P1), (P2) présente un sens de polarisation correspondant à celui des filtres de polarisation (p0), (p1) de la fenêtre (P) de codage.

2. Dispositif selon la revendication 1, caractérisé en ce que les fenêtres (P) de codage sont réalisées dans des dimensions uniformes dans le sens de l'avance.

3. Dispositif selon la revendication 1, caractérisé en ce que les fenêtres (P) de codage sont séparées entre elles dans le sens de l'avance par des barrettes du support (C) de codage.

4. Dispositif selon la revendication 1, caractérisé en ce que le diviseur optique (M) est réalisé en tant que miroir partiellement transparent au rayonnement.

5. Dispositif selon la revendication 1, caractérisé en ce que le dispositif récepteur (E) et la source lumineuse (S) qui lui est attribuée, sont disposés en vis à vis dans des unités (60, 61; 62, 63) structurellement distinctes et en ce que le support (C) de codage est déplacé entre ces unités (60, 61; 62, 63).

6. Dispositif selon la revendication 1, caractérisé en ce que le dispositif récepteur (E) et la source lumineuse (S) qui lui est attribuée, sont logés dans un même boîtier (70), de façon que le rayonnement émis par la source lumineuse (S) puisse être réfléchi sur un réflecteur (R) du support (C) de codage, disposé sur les côtés des fenêtres (p) de codage opposés au boîtier (70) et parvienne dans les détecteurs (D1), (D2) après avoir traversé une ouverture (72) d'entrée de la lumière, le diviseur optique (M), et les filtres de polarisation (P1), (P2).

7. Dispositif selon la revendication 1, caractérisé en ce que le support (C) de codage présente un réflecteur (R) à efficacité bilatérale, et une pluralité de filtres de polarisation (p0l), (p0r), (p1l), (p1r) disposés au dessus du réflecteur, de part et d'autre de celui-ci.

**Claims**

1. Device for the identification of a coding with a radiation source and a receiving means, equipped with a plurality of detectors, at least one of them with a polarising filter on the input side, and intended for evaluation of information contained in the radiation, whereby the information is transmitted onto the radiation by a code carrier with at least one code window, arranged in the radiation path and comprising a polarising filter, for displaying a code element, characterised in that each possible code-element value is associated with a detector with polarising filter on its input side, and that the radiation, after passing through the code window (P) of the code carrier (C), is divisible via a radiation divider (M), which is arranged between the code carrier (C) and the polarising filters (P1, P2) of the detectors (D1, D2), which filters are arranged to have different, vertical polarising directions relative to one another, into radiation beams transmittable to the detectors (D1, D2), in which respect a radiation beam serving as a signal only arrives at the detector (D1, D2) the polarising filter (P1, P2) of which matches with its polarisation that of the polarising filter (p0, p1) of the code window (P).

2. Device according to claim 1, characterised in that the code windows (P) in the feed direction are of unitary size.

3. Device according to claim 1, characterised in that the code windows (P) are separated from one another in the feed direction by webs of the code carrier (C).

4. Device according to claim 1, characterised in that the radiation divider (M) is arranged to be a partially radiation-penetrable reflector.

5. Device according to claim 1, characterised in that the receiving means (E) and therewith associated radiation source (S) are arranged in separate construction units (60, 61; 62, 63) disposed opposite one another, and that the code carrier (C) is guided through between said units (60, 61; 62, 63).

6. Device according to claim 1, characterised in that the receiving means (E) and therewith associated radiation source (S) are accommodated in the same housing (70), so that radiation emitted by the radiation source (S) is reflected by a reflector (R) of the code carrier (C), which is arranged at the sides of the code window (P) facing away from the housing (70), to arrive after passing through a light-input aperture (72), the radiation divider (M) and the polarising filters (P1, P2), in the detectors (D1, D2).

7. Device according to claim 1, characterised in that the code carrier (C) is provided with a doublesidedly effective reflector (R) and with a plurality of polarising filters (p0l, p0r, p1l, p1r) arranged on both sides thereabove.

7

FIG. 1

FIG. 2A

FIG. 2B

FIG. 2C

FIG. 2D.

FIG. 6

P(p0, p1)

FIG. 7

|   | D1 | D2 |
|---|----|----|
| A | 1  | 1  |
| B | 1  | 0  |
| C | 0  | 1  |
| D | 0  | 0  |

FIG. 3

FIG. 4

| | | 0 | | 1 | | 0 | | 0 | | 1 | | 0 | | | |
|---|---|---|---|---|---|---|---|---|---|---|---|---|---|---|---|
| D1 | 1 | 0 | 1 | 0 | 0 | 0 | 1 | 0 | 1 | 0 | 0 | 0 | 1 | 0 | 1 |
| D2 | 1 | 0 | 0 | 0 | 1 | 0 | 0 | 0 | 0 | 0 | 1 | 0 | 0 | 0 | 1 |
| | | 0 | | 1 | | 0 | | 0 | | 1 | | 0 | | |

FIG. 5